# EUROPÄISCHE PATENTSCHRIFT

(11) **EP 0 719 683 B1**
(45) Veröffentlichungstag und Bekanntmachung des Hinweises auf die Patenterteilung: **22.03.2000**
(21) Anmeldenummer: 95120514.5
(22) Anmeldetag: 23.12.1995
(51) Int. Cl.: B60T 1/08

(54) **Bremsanlage mit einem hydrodynamischen Retarder, insbesondere für ein Kraftfahrzeug**
Brake system with hydrodynamic retarder, especially for motor vehicle
Installation de freinage à ralentisseur hydrodynamique, notamment pour automobile

(30) Priorität: 30.12.1994 DE 4447166
(43) Veröffentlichungstag der Anmeldung: 03.07.1996
(73) Patentinhaber: Voith Turbo Beteiligungs GmbH, 89522 Heidenheim (DE)
(72) Erfinder: Adams, Werner, D-74564 Crailsheim (DE); Heilinger, Peter, D-74564 Crailsheim (DE)
(74) Vertreter: Dr. Weitzel & Partner

(56) Entgegenhaltungen:
- DE-A- 4 113 539
- DE-A- 4 408 349
- DE-C- 3 713 580
- GB-A- 2 056 017
- US-A- 3 650 358
- US-A- 3 720 372
- US-A- 4 726 255

## Beschreibung

Die Erfindung betrifft eine Bremsanlage mit einem hydrodynamischen Retarder. Auf den Oberbegriff von Anspruch 1 wird verwiesen.

Solche Bremsanlagen sind aus einer Vielzahl von Veröffentlichungen bekanntgeworden. Nur beispielsweise wird verwiesen auf
- D1:: US-A-3 650 358
- D2:: US-A-3 720 372
- D3:: DE-A-44 08 349

Retarder werden bei schweren Fahrzeugen vor allem eingesetzt, um die insbesondere bei Bremsung aus hoher Fahrgeschwindigkeit (Anpassungsbremsung) anfallende kinetische Bremsenergie aufzunehmen und in Wärme umzusetzen, aber auch für geforderte Dauerbremsleistungen sind Retarder gut geeignet, beispielsweise bei einer konstanten Geschwindigkeit von 30 km/h und bei einem Gefälle von 7 %. Als Betriebsflüssigkeit dient in der Regel Öl. Die im Retarder an die Betriebsflüssigkeit übergegangene Wärme muß mittels eines speziellen Wärmetauschers dem Kühlmittel oder der Umgebungsluft zugeführt werden.

Eines von zahlreichen Problemen solcher Bremsanlagen besteht im Ein- und Ausschalten des Retarders. Eine bekannte Möglichkeit besteht darin, den Retarder nur für den Zweck des Bremsens mit Arbeitsmittel zu füllen, im übrigen aber ungefüllt zu lassen. Eine weitere Möglichkeit besteht darin, den Retarder mechanisch in den Arbeitsstrang ein- bzw. auszuschalten.

Bei mechanisch geschalteten Retardern muß die Drehzahl des Rotors des Retarders während des Einkuppelns an die Drehzahl des Antriebsstranges angepaßt werden. Hierbei wird die Masse des Rotors beschleunigt, und gleichzeitig, d.h. während des Schaltens, wird Bremsmoment übertragen.

Alle bekannten geschalteten Bremsanlagen haben den Nachteil, daß die mit dem Ein- und Ausschalten verbundene Schaltarbeit erheblich ist. Dies führt zu einem Verschleiß der beteiligten Bauteile, ferner zu einem relativ großen Bauvolumen, beispielsweise durch notwendige Kupplungen. Der Bauaufwand ist relativ groß. Ferner können während des Schaltens erhebliche Geräusche auftreten. Besonders unangenehm sind Schaltstöße beim Ein- oder Ausschalten.

Der Erfindung liegt die Aufgabe zugrunde, eine geschaltete Bremsanlage zu schaffen, die eine relativ geringe Schaltarbeit benötigt, ein geringes Bauvolumen hat, einfach im Aufbau ist, und ein stoßfreies Schalten erlaubt.

Diese Aufgabe wird durch die kennzeichnenden Merkmale von Anspruch 1 gelöst.

Die Erfinder haben damit eine geschaltete Bremsanlage geschaffen, bei der das im Rotationsbetrieb maximal erreichbare Retardermoment während des Einkuppelns des Retarders reduziert ist. Der Retarder wird dabei nicht entleert. Er wird aber während der Schaltvorgänge in verändertem Maße oder überhaupt nicht von Arbeitsmittel durchströmt. Dabei ist der zusätzliche Bauaufwand extrem gering. Da das Retardermoment während des Durchschaltens entsprechend reduziert ist, können die zur Synchronisierung des Rotorschaufelrads mit der Antriebswelle erforderlichen mechanischen Leistungsschaltelemente entsprechend kleiner ausgelegt werden und erfahren als Folge der reduzierten Schaltarbeit weniger Verschleiß.

Durch die Erfindung ist es möglich, mit konventionellen mechanischen Leistungsschaltelementen, wie z.B. Synchronringen, kombiniert mit einer Klauenkupplung, ein Bremssystem mit im Bremsbetrieb maximal weitaus größerer Leistung, als mechanisch schaltbar, in den Antriebsstrang eines Fahrzeuges schonend anzukoppeln.

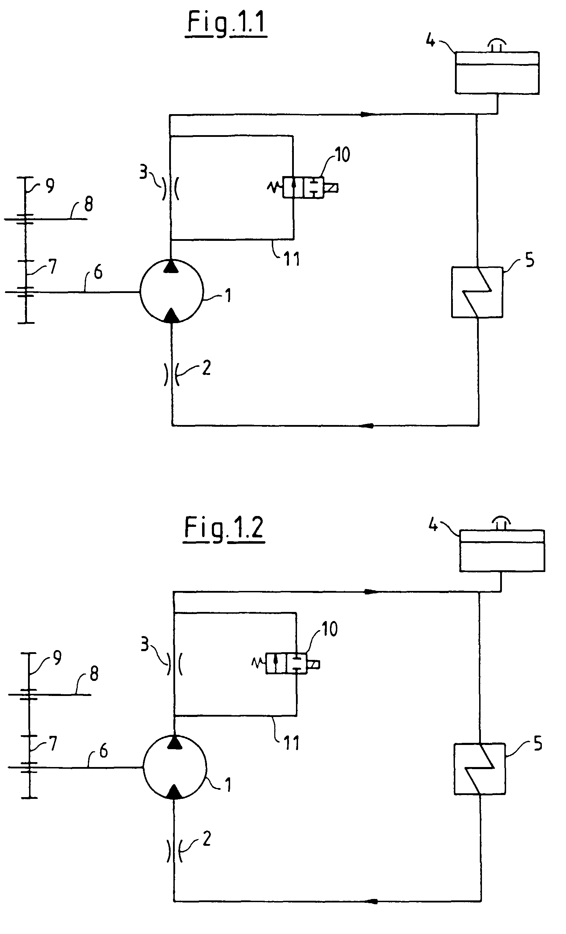

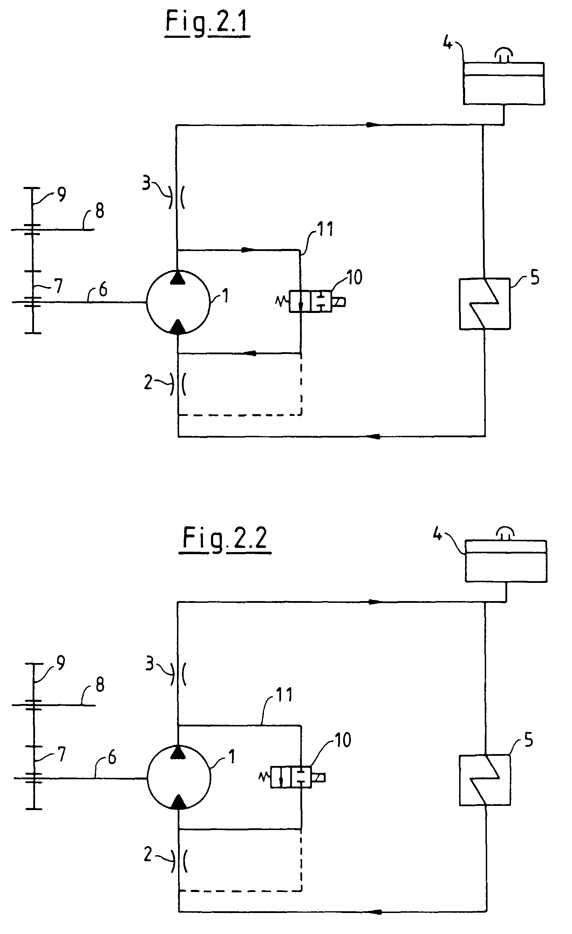

Die Erfindung ist anhand der Zeichnung näher erläutert. Die Varianten der Figuren 1, 2 (1. Alternative), 3, 4, 5, 6, 7.2, 8, 9.1, 9.2, 9.3, 9.4, 9.7, 9.8, 9.9, 13 und 14 fallen nicht unter den Schutzumfang von Anspruch 1. Sie sollen nur das Verständnis der Erfindung erleichtern.

Figur 1.1 zeigt den Kreislauf eines hydrodynamischen Retardersystems mit einem Retarder 1, einer Einlaßdrossel 2, einer Auslaßdrossel 3, einem Ausgleichsbehälter 4 und einem Kühler 5. Auf der Retarderwelle 6 sitzt ein Ritzel 7. Dieses kämmt mit einem Zahnrad 9, das seinerseits auf einer Getriebe-Abtriebswelle 8 aufgekeilt ist.

Eine Bypassleitung 11 ist vorgesehen, mit der sich die Auslaßdrossel 3 umgehen läßt. In der Bypassleitung 11 befindet sich ein Zwei/Zwei Wege-Ventil 10. Hiermit läßt sich die Bypassleitung 11 mehr oder minder öffnen, so wie hier gezeigt. Die Arbeitsflüssigkeit strömt somit auch durch die Bypassleitung 11, und nicht nur durch die Auslaßdrossel 3. Auf diese Weise wird das vom Retarder erzeugte Bremsmoment entsprechend abgesenkt. Dieser Vorgang vermeidet in vorteilhafter Weise eine große Schaltarbeit.

Figur 1.2 zeigt denselben Gegenstand wie Figur 1.1, jedoch bei geschlossenem 2/2 Wege-Ventil. Die Arbeitsflüssigkeit strömt nunmehr vollständig durch die Auslaßdrossel 3 hindurch. Der Retarder 1 liefert ein entsprechend hohes Bremsmoment.

Bei der Ausführungsform gemäß der Figuren 2.1 und 2.2 weist das hydrodynamische Retardersystem die gleichen Komponenten auf wie bei den Figuren 1.1 und 1.2. Jedoch ist hierbei die Bypassleitung 11 derart angeordnet, daß der Retarder 1 im Kurzschluß betrieben werden kann. Das 2/2 Wege-Ventil 10 ist dann zwischen Einlaßdrossel 2 und Auslaßdrossel 3 geschaltet. Seine Funktion und Wirkungsweise ist im übrigen identisch mit der Ausführungsform gemäß der Figuren 1.1 und 1.2. Wird Ventil 10 geöffnet, so werden der Einlaß und der Auslaß des Retarders 1 kurzgeschlossen, und es strömt Arbeitsmittel durch die Bypassleitung 11. Ist der Querschnitt der Bypassleitung 11 genügend groß bemessen, so strömt das Arbeitsmittel fast ausschließlich durch die Bypassleitung 11. Der Retarder wirkt somit als Pumpe mit zwar hohem Durchsatz, jedoch geringem Fließwiderstand und nimmt entsprechend wenig Leistung auf. Dieser Zustand ist in Figur 2.1 dargestellt. Als Alternativlösung kommt in Betracht, auch noch die Einlaßdrossel 2 in den Kurzschluß einzubeziehen - siehe gestrichelte Linie in den Figuren 2.1 und 2.2.

Der Vorteil der Anordnung gemäß der Figuren 2.1 und 2.2 ist derselbe wie jener gemäß der Figuren 1.1 und 1.2. Das Umschalten des Retarders erfolgt auf elegante Weise ohne großen Arbeitsaufwand.

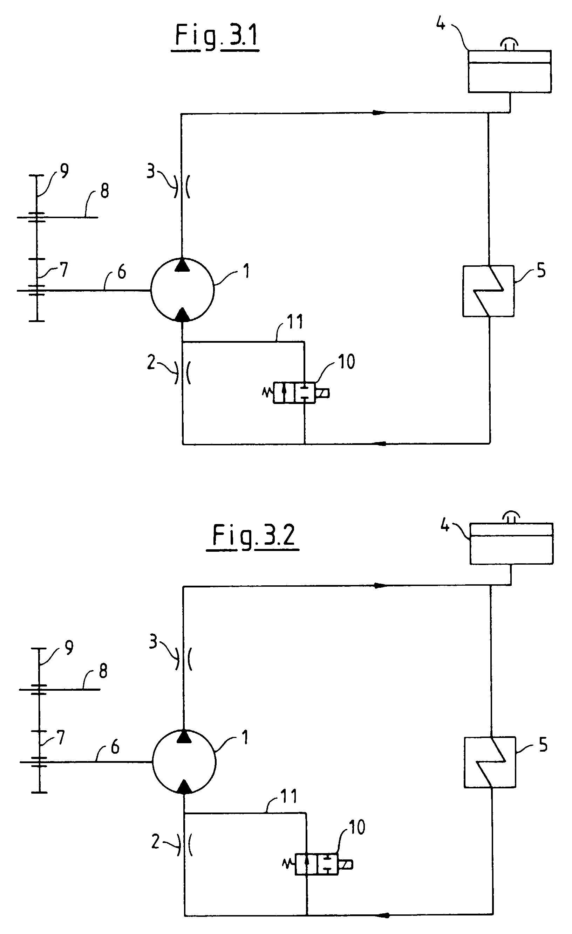

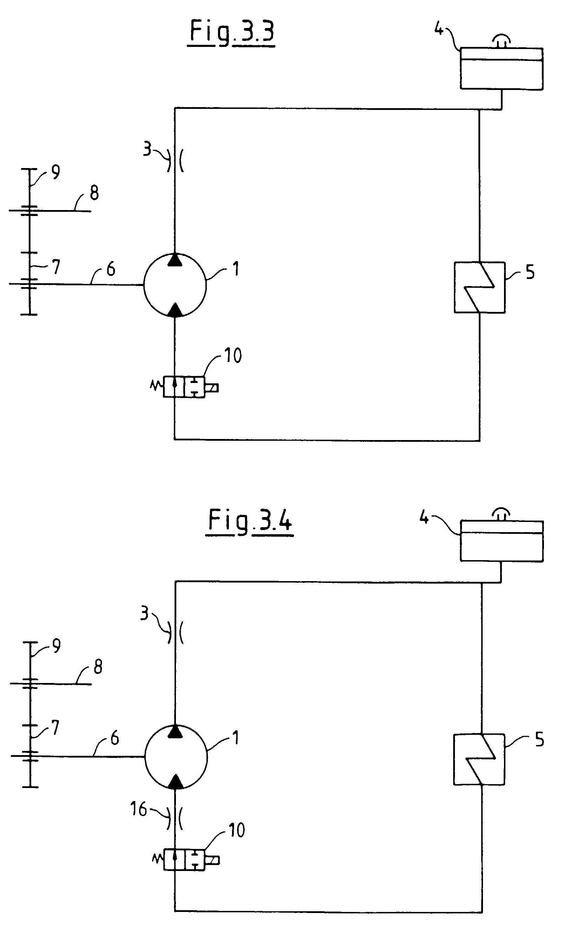

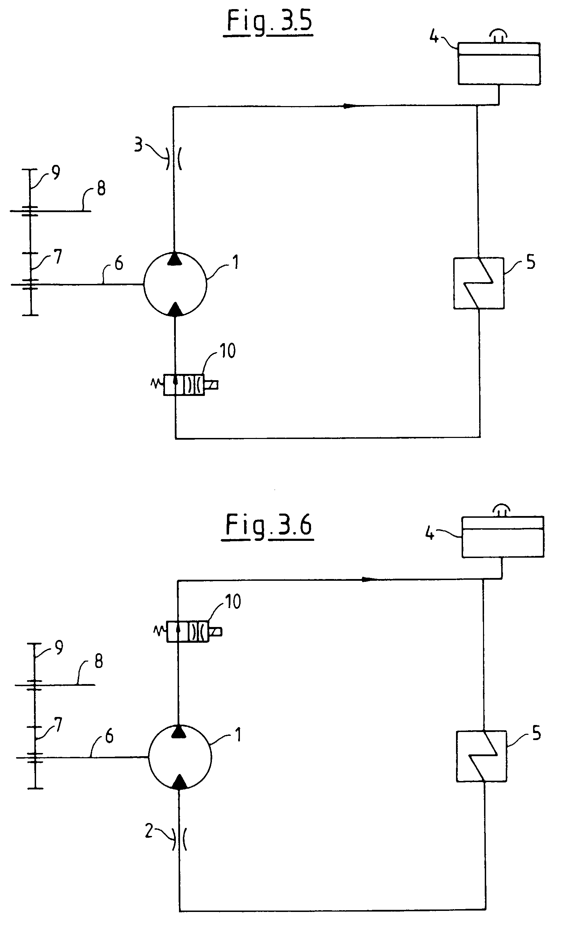

Die in den Figuren 3.1 und 3.2 dargestellten Kreisläufe weisen wiederum die gleichen Komponenten auf wie die vorausgegangenen Ausführungsformen. Die Bypassleitung 11 ist jedoch anders angeordnet; hierbei kann nämlich die Einlaßdrossel 2 durch die Bypassleitung 11 umgangen und durch Ventil 10 außer Kraft gesetzt werden. Ventil 10 mit seinem relativ großen Querschnitt stellt hierbei die im Bremsbetrieb aktive Drossel dar. Einlaßdrossel 2 besitzt einen sehr geringen Querschnitt mit entsprechend hohem Durchflußwiderstand.

Befindet sich Ventil 10, so wie in Figur 3.1 gezeigt, in Geschlossen-Stellung, so kann Arbeitsmittel nur durch die Einlaufdrossel 2 strömen. Wegen des genannten hohen Retarderzulaufwiderstandes und des hieraus folgenden geringen Arbeitsmitteldurchsatzes erzeugt Retarder 1 nur ein geringes Bremsmoment. Wird Einlaufdrossel 2 gänzlich abgesperrt, so geht das Bremsmoment auf ein Minimum herab.

Anders liegen die Verhältnisse bei der Offen-Stellung des Ventils 10 gemäß Figur 3.2. Hierbei strömt das Arbeitsmittel durch Ventil 10 hindurch, so daß ein maximales Bremsmoment erzeugt wird.

Alternativ zu dieser Ausführungsform ist es auch möglich, auf die Drossel 2 und die Bypassleitung 11 gänzlich zu verzichten, und statt dessen Ventil 10 direkt in die Retarder-Zulaufleitung einzubauen. Ist hierbei Ventil 10 geöffnet, so wie in Figur 3.3 dargestellt, so erhält Retarder 1 die volle Arbeitsmittelmenge und entwickelt daher ein volles Bremsmoment. Ist es geschlossen, so enthält Retarder 1 kein Arbeitsmittel, so daß das Bremsmoment auf ein Minimum abfällt.

Figur 3.4 zeigt eine Alternative zu der Ausführungsform gemäß Figur 3.3. Hierbei ist Ventil 10 eine Drossel 16 nachgeschaltet.

Diese Anordnung hat die folgenden Vorteile:

Die Drossel 16 kann einen kleineren Querschnitt aufweisen als Ventil 10. Ein Druckabbau findet dann in Drossel 16 statt, desgleichen eine mögliche Kavitation. Damit hat Drossel 16 eine Schutzfunktion zugunsten des viel teureren Ventiles 10.

Ein weiterer Vorteil besteht darin, daß bei einem etwa notwendig gewordenen Austausch oder bei einer Querschnittsanpassung die billigere Drossel als Variantenteil zur Verfügung steht.

Im Gegensatz zu den vorausgegangenen Ausführungsformen wird hierbei der aktive Zulaufquerschnitt durch Drossel 16 bestimmt.

Bei der Ausführungsform gemäß Figur 3.5 ist das 2/2 Wege-Ventil 10 wiederum im Zulauf zum Retarder angeordnet. Der zum Erzielen des Bremsmomentes notwendige Querschnitt wird hierbei durch Ventil 10 definiert. Ventil 10 läßt sich von einer "Voll-Offen"-Position in eine gedrosselte Position schalten.

Bei der Ausführungsform gemäß Figur 3.6 ist das 2/2 Wege-Ventil 10 dem Retarder 1 nachgeschaltet. Auf der Zulaufseite ist wieder eine Einlaufdrossel 2 vorgesehen. Durch entsprechendes Schalten von Ventil 10 läßt sich der Durchsatz an Arbeitsmittel entweder drosseln oder völlig freigeben, womit das Bremsmoment auf ein Max- und Min-Niveau einstellbar ist.

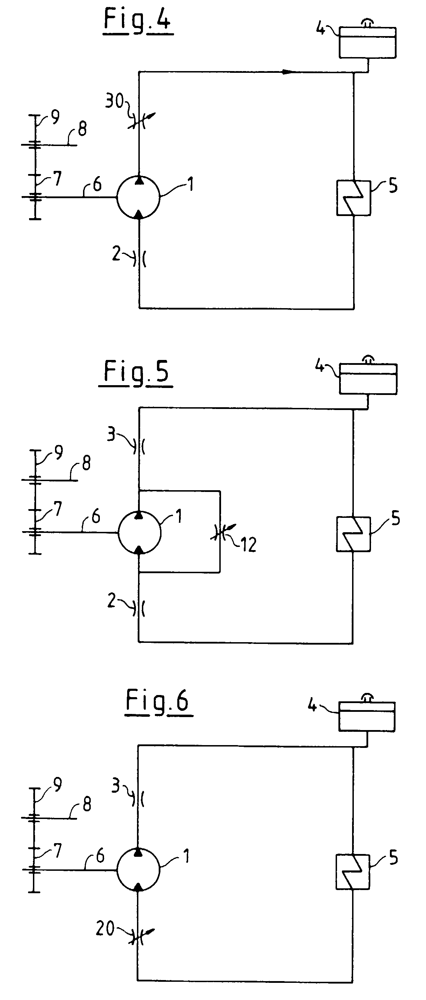

Bei der in Figur 4 dargestellten Ausführungsform ist wiederum eine Einlaßdrossel 2 vorgesehen. In der Auslaßleitung ist eine Auslaßdrossel 30 angeordnet. Diese ist regelbar, was ganz entscheidend ist. Im Leerlaufbetrieb sowie vor oder während des Schaltens des Retarders kann sie weit geöffnet werden, so daß ein großer Querschnitt zur Verfügung steht und damit ein minimales Bremsmoment. Nach dem Schalten läßt sich dieser Querschnitt auf einen sehr kleinen Wert verringern, womit das Bremsmoment entsprechend hoch wird.

Ein großer Vorteil dieser Ausführungsform liegt in der Möglichkeit eines sanften Anstieges des Bremsmomentes, wobei Momentenstöße vermieden werden. Dies schont sämtliche beteiligten Bauteile. Außerdem spart man bei dieser Ausführungsform die Bypassleitung 11 ein.

Die in Figur 5 dargestellte Ausführungsform ist ähnlich derjenigen gemäß der Figuren 2.1 und 2.2. Statt des Ventils 10 ist jedoch hierbei eine Drossel 12 in der Bypassleitung 11 vorgesehen. Entscheidend ist, daß Drossel 12 regelbar ist. Drossel 12 ist in Funktion und Wirkungsweise im wesentlichen identisch mit Drossel 30 gemäß Figur 4. Durch die Anordnung in der Bypassleitung 11 ergibt sich jedoch eine interessante Variante bezüglich der Gestaltung des Bremsmomentenverlaufes.

Bei der Ausführungsform gemäß Figur 6 ist die Einlaßdrossel 20 als regelbare Drossel ausgebildet, während Auslaßdrossel 3 wiederum eine konstante Drossel ist. Einlaßdrossel 20 wirkt in ihrer Funktion umgekehrt wie Auslaßdrossel 30 in Figur 4. Dies bedeutet, daß der Querschnitt der Drossel vor oder während des Schaltvorganges auf ein Minimum verringert werden kann. Damit werden der dem Retarder zugeführten Fluidstrom und demgemäß das Drehmoment in gewünschter Weise minimiert. Umgekehrt kann Drossel 20 auch weit geöffnet werden, mit den gegenteiligen Folgen.

Wie bei der Ausführungsform gemäß Figur 4 hat man auch hier wiederum den Vorteil, daß die Bypassleitung 11 entfällt und die Kosten dadurch gesenkt werden.

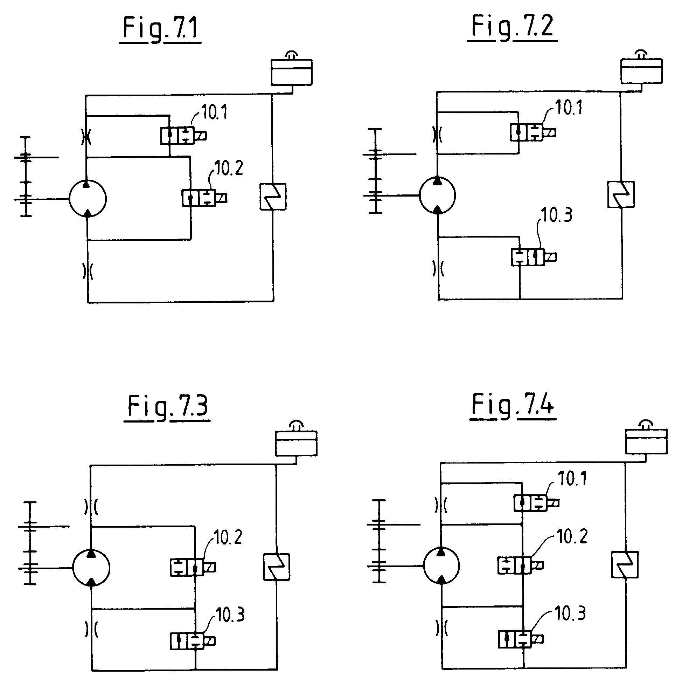

Die Figuren 7.1 bis 7.4 zeigen vier Ausführungsformen, bei denen verschiedene Kombinationen von 2/2 Wege-Ventilen 10.1, 10.2, 10.3 angewandt werden. Bei diesen vier Ausführungsformen sind nicht nur die Anordnungen und Schaltungen unterschiedlich, sondern es können auch verschiedene Baugrößen und verschiedene Nennweiten der genannten Ventile 10.1 bis 10.3 verwendet werden.

Alle anderen Bauteile sind gleich oder identisch mit den Bauteilen der vorausgegangenen Schaltungen.

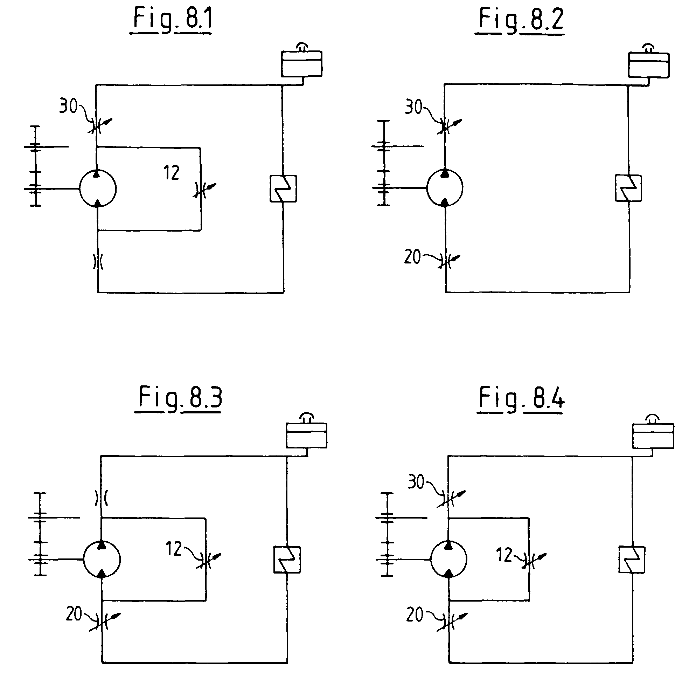

Die Figuren 8.1 bis 8.4 zeigen weitere Kombinationsmöglichkeiten von Regeldrosseln 20, 30 und 12. Damit lassen sich unterschiedliche Regelbereiche abdecken.

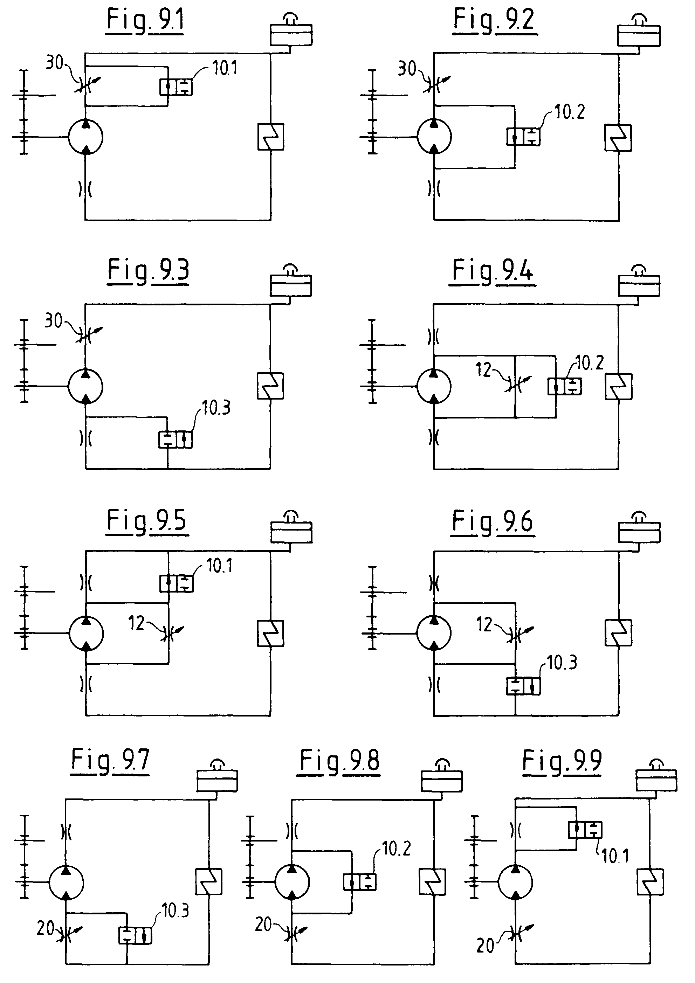

Die Figuren 9.1 bis 9.9 zeigen weitere Kombinationsmöglichkeiten von Regeldrosseln und Ventilen. Diese Kombinationen haben den Vorteil, daß der Regelbereich der einzelnen Drossel auf einen für den Bremsbetrieb maximal notwendigen Bereich minimierbar ist. Die während einer Schaltperiode herrschende Querschnittsveränderung wird jeweils durch das zusätzlich installierte Ventil übernommen. Durch die Aufteilung auf die beiden Ventile läßt sich Baugröße einsparen.

Grundsätzlich lassen sich bei den bisher gezeigten Ausführungsformen die Retarder mit jeder geeigneten Flüssigkeit betreiben.

Die Figuren 10.1 und 10.2 zeigen jeweils eine interessante Ausführungsform einer Antriebsanlage mit einem Retardersystem.

Dabei sind die bereits in den vorausgegangenen Ausführungsformen enthaltenen Bauteile auch hier mit denselben Bezugszeichen versehen, siehe z.B. den Retarder 1, die Retarderwelle 6, usw.

Die Antriebsanlage umfaßt einen Verbrennungsmotor 100. Diesem ist u.a. ein Kühler 400 zugeordnet. Eine Wasserpumpe 500 ist dem Motor 100 vorgeschaltet, und eine zusätzliche Pumpe 13 ist ihm nachgeschaltet. Ferner ist ein Thermostat 200 vorgesehen.

Ganz wesentlich ist bei dieser Ausführungsform ein 3/2 Wege-Ventil 14, welches einen Bypass 15 steuert. Hierbei kann die Pumpe 13 auch auf der Retarderwelle 6 oder auf einer separaten Welle am Getriebeausgang angeordnet sein.

Die Pumpe 13 dient zur Kühlmitteldurchsatzerhöhung während des Bremsbetriebes bei hoher Fahrgeschwindigkeit und niederen Motordrehzahlen. Die Vermeidung eines Drehmomentenanstieges während des Schaltvorganges erfolgt hierbei durch zeitverzögertes Schalten des Ventiles 14. Dies bedeutet, daß unmittelbar vor oder während der Schaltvorgänge das Arbeitsmittel über den Bypass 15 geführt wird.

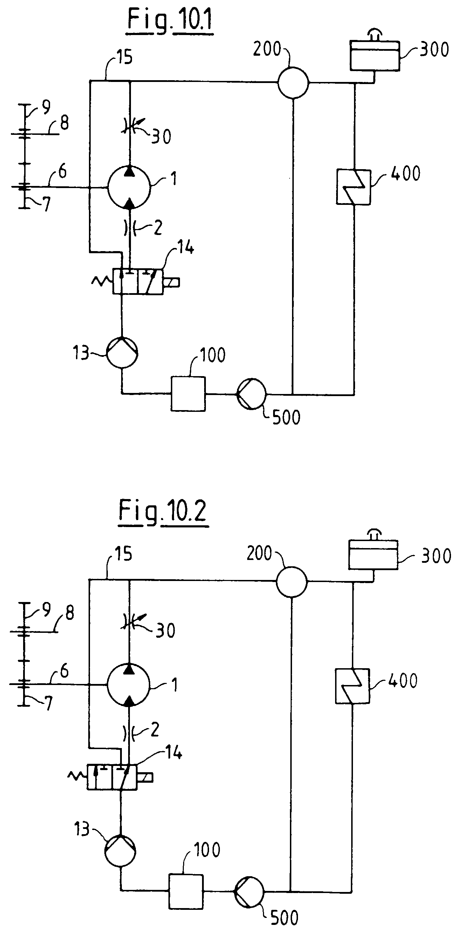

Nach dem Schaltvorgang vom Zustand gemäß Figur 10.1 (Retarder aus) zum Zustand gemäß Figur 10.2 (Retarder ein) kann durch Drossel 30 zusätzlich ein sanftes Einregeln erreicht werden.

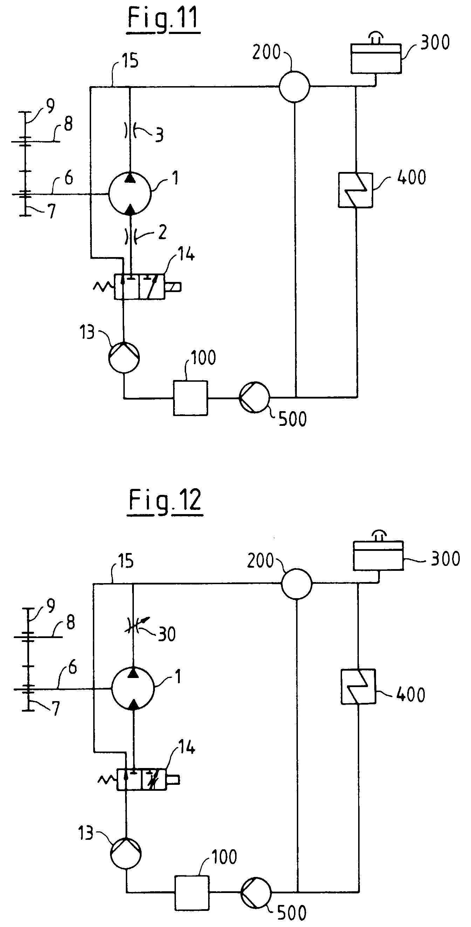

Die regelbare Drossel 30 kann auch durch eine feste Drossel ersetzt werden. Diese ist in Figur 11 dargestellt.

Die Ausführungsform gemäß Figur 12 ist analog der Ausführungsform gemäß der Figuren 10.1 und 10.2, jedoch übernimmt hierbei Ventil 14 die Funktion von Drossel 2.

Auch hier besteht wiederum die Möglichkeit, statt der regelbaren Drossel 30 eine konstante Drossel 3 vorzusehen.

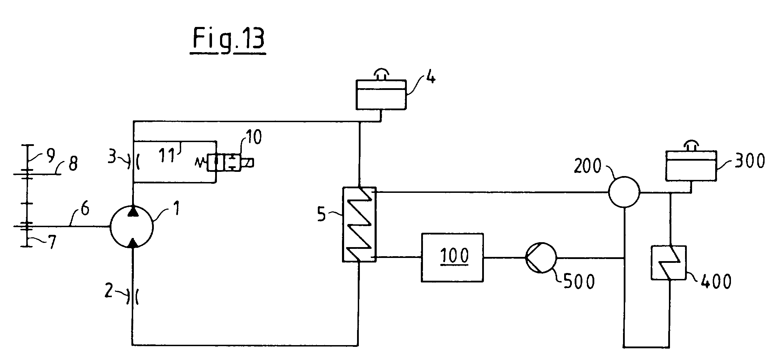

Figur 13 zeigt eine Antriebsanlage, bei der ein Retardersystem mit einem separaten Kreislauf eingebunden ist. Hierbei wird der Energieaustausch durch den Retarderkühler 5 vorgenommen. Dieser gibt die Bremsenergie an die Kühlflüssigkeit des Fahrzeuges ab. Er befindet sich im Kühlkreislauf des Fahrzeuges zwischen Motoraustritt und Zulauf zum Thermostaten 200. Man erkennt wieder die folgenden Bauteile: einen Motor 100, den Thermostat 200, den Ausgleichsbehälter 300, den Fahrzeugkühler 400 sowie die Kühlmittelpumpe 500.

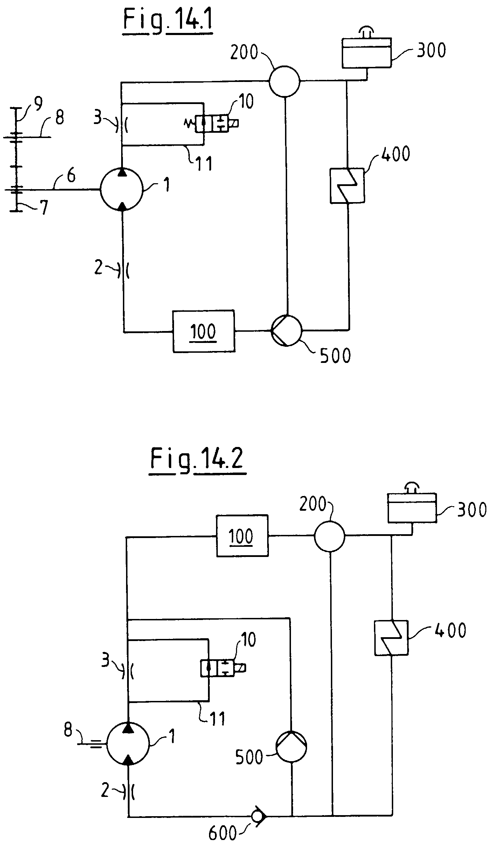

Das in Figur 14.1 dargestellte Schema einer Antriebsanlage veranschaulicht eine weitere Möglichkeit einer Einbindung eines Retardersystems in den Kühlkreislauf des Fahrzeugs. Hierbei ist Retarder 1 auch während des Nicht-Bremsbetriebes von Kühlmittel durchströmt. Während des Bremsbetriebes wird Retarder 1 von der Kühlmittelpumpe 500 des Fahrzeuges gespeist.

Bei der Ausführungsform gemäß Figur 14.2 ist Retarder 1 - analog zur Ausführungsform gemäß Figur 1 - in den Kühlkreislauf eingeschaltet und außerdem in den Antriebsstrang eines Fahrzeugs. Hierbei ist aber Retarder 1 parallel zur Kühlmittelpumpe 500 des Fahrzeuges geschaltet. Retarder 1 muß hierbei schaltbar auf der Antriebswelle 8 oder über einen Hochgang auf einer separaten Retarderwelle angeordnet sein. Hierbei fungiert der Retarder im Bremsbetrieb als zusätzliche Pumpe (sogenannter Wasserpumpenretarder). Er ist somit selbstansaugend und wird nicht von der eigentlichen Wasserpumpe gespeist. Analog zur Ausführungsform gemäß Figur 14.1 entfallen ebenfalls Ausgleichsbehälter 4 und Retarderkühler 5. Zusätzlich kann ein Rückschlagventil 600 notwendig werden.

## Patentansprüche

1. Bremsanlage, insbesondere für ein Kraftfahrzeug;
1.1 mit einem schaltbaren hydrodynamischen Retarder (1), der ein Statorschaufelrad und ein Rotorschaufelrad aufweist;
1.2 mit einem Leitungssystem, das das Arbeitsmittel des Retarders (1) führt, und das den Retarder (1) sowie einen Kühler (5) enthält;
1.3 der Retarder (1) weist eine Einlaßdrossel (2) und/oder eine Auslaßdrossel (3) auf;
1.4 es sind Maßnahmen getroffen, um das Bremsmoment des Retarders (1) während des Einschaltens unterhalb des vollen Wertes zu halten; gekennzeichnet durch die folgenden Merkmale:
1.5 das Leitungssystem weist eine Bypassleitung (11) auf, die den Retarder (1) und die Einlaßdrossel (2) oder den Retarder und die Auslaßdrossel (3) umgeht.

2. Bremsanlage nach Anspruch 1, dadurch gekennzeichnet, daß Maßnahmen getroffen sind, um den Durchsatz an Arbeitsmittel durch den Retarder (1) zum Zwecke des Schaltens zu verändern.

3. Bremsanlage nach Anspruch 1 oder 2, dadurch gekennzeichnet, daß zwei oder mehrere Bypassleitungen vorgesehen sind.

4. Bremsanlage nach einem der Ansprüche 1 bis 3, dadurch gekennzeichnet, daß die Bypassleitung regelbare Drosselventile enthält.

5. Bremsanlage nach einem der Ansprüche 1 bis 4, dadurch gekennzeichnet, daß diese mit einer Antriebsanlage zusammengeschaltet ist.

## Claims

1. Brake system, especially for a motor vehicle
1.1 with a switchable hydrodynamic retarder (1), which comprises a stator blade wheel and a rotor blade wheel;
1.2 with a line system which guides the working medium of the retarder (1) and which comprises the retarder (1) and a cooler (5);
1.3 the retarder (1) comprises an inlet restrictor (2) and/or an outlet restrictor (3);
1.4 measures are taken to hold the brake moment of the retarder (1) below the full value whilst switching on;
characterised by the following features;
1.5 the line system comprises a bypass line (11) which bypasses the retarder (1) and the inlet restrictor (2) or the retarder and the outlet restrictor (3).

2. Brake system according to claim 1, characterised in that measures are taken to change the throughput of working medium through the retarder (1) for the purpose of switching.

3. Brake system according to claim 1 or 2, characterised in that two or more bypass lines are provided.

4. Brake system according to one of claims 1 to 3, characterised in that the bypass line contains controllable restrictor valves.

5. Brake system according to one of claims 1 to 4, characterised in that the latter is connected to a drive system.

## Revendications

1. Installation de freinage, en particulier pour un véhicule automobile;
1.1 avec un ralentisseur hydrodynamique (1) embrayable, présentant une roue de stator à aubages et une roue de rotor à aubages;
1.2 avec un système de tuyauteries qui transporte l'agent de travail du ralentisseur (1) et qui comporte le ralentisseur (1) ainsi qu'un refroidisseur (5);
1.3 le ralentisseur (1) présente un étrangleur d'entrée (2) et/ou un étrangleur de sortie (3);
1.4 des mesures sont prises pour maintenir le moment de freinage du ralentisseur (1) en dessous de la pleine valeur pendant la mise en circuit;
caractérisée par les caractéristiques suivantes:
1.5 le système de tuyauteries présente une tuyauterie de dérivation (11) qui contourne le ralentisseur (1) et l'étrangleur d'entrée (2) ou le ralentisseur et l'étrangleur de sortie (3).

2. Installation de freinage selon la revendication 1, caractérisée en ce que des mesures sont prises pour modifier le débit de l'agent de travail transitant dans le ralentisseur (1) dans le but de réaliser une opération de commutation.

3. Installation de freinage selon la revendication 1 ou 2, caractérisée en ce que deux ou plusieurs tuyauteries de dérivation sont prévues.

4. Installation de freinage selon l'une des revendications 1 à 3, caractérisée en ce que la tuyauterie de dérivation contient des valves d'étranglement régulables.

5. Installation de freinage selon l'une des revendications 1 à 4, caractérisée en ce que celle-ci est couplée à une installation d'entraînement.
